# EUROPEAN PATENT APPLICATION

(11) **EP 2 919 149 A2**
(43) Date of publication of application: **16.09.2015**
(21) Application number: 14200541.2
(22) Date of filing: 30.12.2014
(51) Int. Cl.: G06K 9/00

(54) **Image processing apparatus and image processing method**

(30) Priority: 13.03.2014 JP 2014050721
(71) Applicant: OMRON CORPORATION, Kyoto-shi, Kyoto 600-8530 (JP)
(72) Inventor: Irie, Atsushi, Kyoto-shi, Kyoto 600-8530 (JP); Takagiwa, Mutsuki, Kyoto-shi, Kyoto 600-8530 (JP)
(74) Representative: Kilian Kilian & Partner

(57) **Abstract**

Provided is an image processing apparatus according to which, even when a relationship between the magnitudes of brightness values of objects that belong to the same category is inverted, feature amounts that are similar to the extent that the objects can be recognized as belonging to the same category are acquired. The image processing apparatus includes an image acquiring unit (11) configured to acquire an image, and a feature amount acquiring unit (12, 13) configured to acquire feature amounts that correspond to the acquired image by performing a predetermined arithmetic operation on the image, and to output the acquired feature amount, wherein when the acquired feature amounts include a negative value, the feature amount acquiring unit replaces the negative value with the absolute value of the negative value.

## Description

### BACKGROUND OF THE INVENTION

### Field of the Invention

The present invention relates to an image processing apparatus that performs image recognition.

### Description of the Related Art

An image recognition technique for identifying an object included in an image based on specific information obtained from the image, such as a color or shape, has become widely used.

Apparatuses for performing image recognition often use a method in which feature amounts that correspond to an image are acquired using brightness information of pixels, and an object is identified based on the feature amounts. "Feature amount" refers to a numerical value that expresses a specific feature by which an object is identified.

An image recognition apparatus disclosed in JP 2009-080522A is an example of a technique for performing object recognition using feature amounts. In the image recognition apparatus, a pair of feature amounts is acquired from an image and encoded, arithmetic operation results obtained at a plurality of points are combined therewith, and feature amounts of the entire image are calculated.

JP 2009-080522A is an example of background art.

Examples of representative feature amounts for use in the image recognition apparatus according to the conventional technique include values representing the contour (edge) of an object and values representing differences in contrast between regions. These values are each calculated based on the brightness of a target region, and thus vary when the brightness of an object being referenced changes.

The problem caused by the characteristics will be described in detail, taking an apparatus that detects a human face in an image as an example. An ordinary image recognition method is a method in which a difference in contrast between regions included in an image is extracted as a feature amount, and compared with a template. For example, by comparing feature amounts acquired from regions that correspond to an eye and a cheek with a template that defines information indicating that "a region that includes an eye is darker than a region that includes a cheek", it is possible to calculate a degree of coincidence with the human face.

However, the contrast between regions may be inverted, depending on the skin color of an object person or the state of the illumination. That is, this case corresponds to a case where a region that includes an eye is brighter than a region that includes a cheek. In such a case, the acquired feature amounts do not match the template, and thus a problem arises in that it is not possible to correctly detect the face.

The conventional technique such as the invention disclosed in JP 2009-080522A cannot address this problem.

### SUMMARY OF THE INVENTION

The present invention was made in view of the above-described problem, and provides an image processing apparatus according to which, even when the relationship between the magnitudes of the brightness values of objects that belong to the same category is inverted, it is possible to acquire feature amounts that are similar to each other to the extent that the objects can be recognized as belonging to the same category.

In order to solve the above-described problem, an image processing apparatus according to a first aspect of the present invention includes: an image acquiring unit configured to acquire an image; and a feature amount acquiring unit configured to acquire feature amounts that correspond to the acquired image by performing a predetermined arithmetic operation on the image, and to output the acquired feature amounts, wherein when the acquired feature amounts include a negative value, the feature amount acquiring unit replaces the negative value with the absolute value of the negative value.

The image processing apparatus according to the present invention is an apparatus that acquires feature amounts that correspond to an acquired image by performing an arithmetic operation on the image. The feature amounts that correspond to the image are a set of a plurality of values, and may be, for example, a set of feature amounts that correspond to pixels, or a set of feature amounts that correspond to local regions.

Furthermore, when the acquired feature amounts include a negative value, the feature amount acquiring unit replaces the negative value with the absolute value of the negative value. With this, even when a dark section and a bright section of an identification target object (hereinafter, referred to as an object) are inverted, the same feature amount can be acquired.

Furthermore, the feature amount acquiring unit may acquire feature amounts that respectively correspond to a plurality of target pixels included in the acquired image, and output the acquired feature amounts as feature amounts that correspond to the image.

"Target pixels" refers to pixels with which the feature amounts for use in identification of an object are associated. The target pixels are preferably pixels that represent the feature of an object well, such as pixels located at an edge or a corner of the object. The feature amounts that correspond to the image may also be a set of feature amounts that correspond to such a plurality of target pixels.

Furthermore, each of the feature amounts that correspond to target pixels may be a value obtained by executing a predetermined arithmetic operation on a brightness value of the corresponding target pixel and a brightness value of a pixel that is located in the vicinity of that target pixel, or a value representing a difference between brightness values of the corresponding target pixel and a pixel that is located in the vicinity of that target pixel.

Accordingly, it is possible to acquire feature amounts that represent the features of an object well by performing an arithmetic operation, such as filtering or pixel difference, on the target pixels.

Furthermore, the feature amount acquiring unit may also acquire feature amounts that respectively correspond to a plurality of local regions included in the acquired image, and output the acquired feature amounts as feature amounts that correspond to the image.

"Local region" may preferably refer to a region that represents the feature of an object well, such as a region that clearly shows a difference in brightness from adjacent regions. The feature amounts that correspond to the image may also be a set of feature amounts that correspond to such a plurality of local regions.

Furthermore, each of the feature amounts that correspond to local regions may be a value representing a difference between brightness values of the corresponding local region and a region that is located in the vicinity of that local region.

Accordingly, by using a difference between brightness values of regions as a feature amount, it is possible to compare the feature amount with a pattern showing a contrast of an object.

Furthermore, an identification apparatus according to the present invention may include the image processing apparatus, and an identifying unit configured to identify any one of a face, a human body, a character, an animal, a vehicle, and a predetermined object that are included in an image, based on feature amounts that were output by the image processing apparatus.

Accordingly, the image processing apparatus according to the present invention is applicable to an apparatus for identifying an object included in an image based on acquired feature amounts. For example, the image processing apparatus is applicable to a digital camera or the like that has the face detection function. Note that a predetermined object refers typically to a building, a roadway sign, a commercial good, a product packaging, a logotype indicating a corporate or service, or the like, but the present invention is not limited to these.

Furthermore, an image processing apparatus according to a second aspect of the present invention may include an image acquiring unit configured to acquire an image; and a feature amount acquiring unit configured to acquire feature amounts that correspond to the acquired image by encoding a result obtained by comparing brightness values of a plurality of pixels included in the image, wherein when comparing the brightness values, the feature amount acquiring unit determines values that indicate whether or not the compared brightness values are different from each other, and generates feature amounts that correspond to the image using the values.

In the case where encoded results obtained by comparing brightness values, such as "bright", "equivalent", and "dark", are used as feature amounts, when the relationship between the magnitudes of brightness is inverted, the encoded feature amount may vary. Therefore, it is also possible to use codes to indicate only whether or not the compared brightness values are different from each other, the codes being regarded as feature amounts. With this, even when the brightness of an object is inverted, it is possible to acquire the same feature amount.

Note that the present invention may be specified as an image processing apparatus that includes at least some of the above-described units. Furthermore, the present invention may also be specified as an image processing method. Furthermore, the present invention may also be specified as a program for causing a computer to execute the image processing method. The above-described processing and units may be implemented in any combination as long as no technical conflict occurs.

According to the present invention, it is possible to provide an image processing apparatus according to which, even when the relationship between the magnitudes of the brightness values of objects that belong to the same category is inverted, it is possible to acquire feature amounts that are similar to each other to the extent that the objects can be recognized as belonging to the same category.

### BRIEF DESCRIPTION OF THE DRAWINGS

FIG. 1 is a diagram illustrating a system configuration of an image processing apparatus according to a first embodiment.
FIGS. 2A to 2C are diagrams illustrating examples of filter matrices.
FIG. 3 is a diagram illustrating a method for applying a filter.
FIGS. 4A and 4B are diagrams illustrating feature amounts using differences in brightness value.
FIGS. 5A and 5B are diagrams illustrating a feature amount calculation method according to the first embodiment.
FIG. 6 is a flowchart of processing of the image processing apparatus according to the first embodiment.
FIG. 7 shows diagrams illustrating a feature amount calculation method according to a second embodiment.
FIG. 8 shows diagrams illustrating a problem to be solved in the second embodiment.
FIGS. 9A and 9B are diagrams illustrating feature amounts that are acquired in the second embodiment.

### DESCRIPTION OF THE EMBODIMENTS

### (First Embodiment)

### <System Configuration>

Hereinafter, preferred embodiments of the present invention will be described with reference to the drawings.

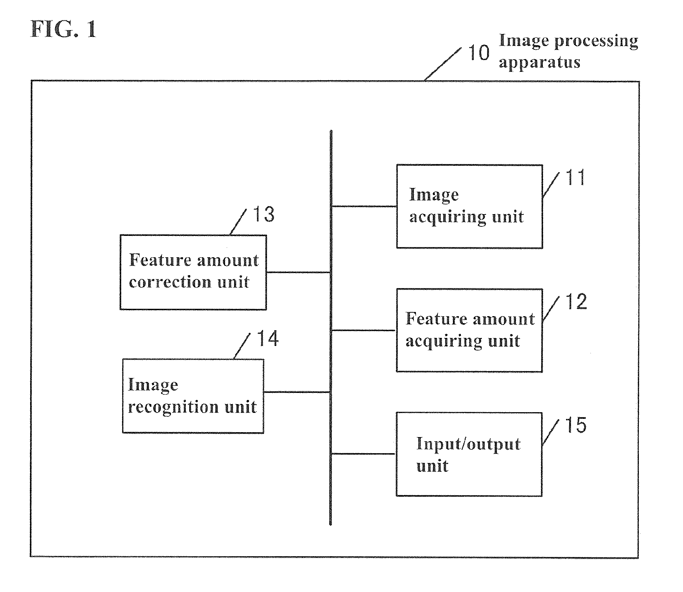

An image processing apparatus according to a first embodiment is an apparatus that acquires an image such as a picture, acquires feature amounts that correspond to the image, and recognizes an object included in the image. FIG. 1 is a diagram illustrating a system configuration of an image processing apparatus 10 according to the present embodiment.

The image processing apparatus 10 includes an image acquiring unit 11, a feature amount acquiring unit 12, a feature amount correction unit 13, an image recognition unit 14, and an input/output unit 15.

The image acquiring unit 11 is a unit that acquires an image to be processed, and is a storage unit such as a fixed disk drive or a flash memory in the present embodiment. Note that the image acquiring unit 11 may also be a unit (for example, a communication device) that acquires an image from the outside of the apparatus, or a unit that captures an image via a lens and an image sensor.

Furthermore, the feature amount acquiring unit 12 is a unit that acquires a feature amount that corresponds to the image acquired by the image acquiring unit 11. A feature amount that is to be used and a method for acquiring the same will be described later using examples.

Furthermore, the feature amount correction unit 13 is a unit that corrects a feature amount acquired by the feature amount acquiring unit 12. A specific correction method will be described later.

The image recognition unit 14 is a unit that recognizes an object included in the image based on the feature amount corrected by the feature amount correction unit 13. In the present embodiment, "object" refers to a human face. The image recognition unit 14 can detect a face included in the image by comparing the acquired feature amounts with a template that is stored in advance. A method for detecting a face included in an image based on feature amounts acquired from the image is well known, and thus detailed description thereof is omitted.

Furthermore, the input/output unit 15 is a unit that receives an input operation by a user and presents information to the user. Specifically, the input/output unit 15 includes a touch panel and a controller thereof, and a liquid crystal display and a controller thereof. In the present embodiment, one touch panel display serves as the touch panel and the liquid crystal display.

The functions of the image acquiring unit 11, the feature amount acquiring unit 12, the feature amount correction unit 13, and the image recognition unit 14 are realized by a processing device, such as a CPU, executing a control program. Furthermore, the functions may also be realized by an application specific integrated circuit (ASIC) or the like, or a combination thereof.

### <Feature Amount Acquiring Processing>

The following will describe processing in which the image processing apparatus 10 acquires feature amounts that correspond to an acquired image. Note that, since there are many feature amount acquiring methods, description will be given here taking a typified method as an example.

### «Filtering»

Filtering is a method in which a predetermined filter matrix is convolved with respect to a local region centered at a pixel, and the obtained value is used as a feature amount that corresponds to that pixel.

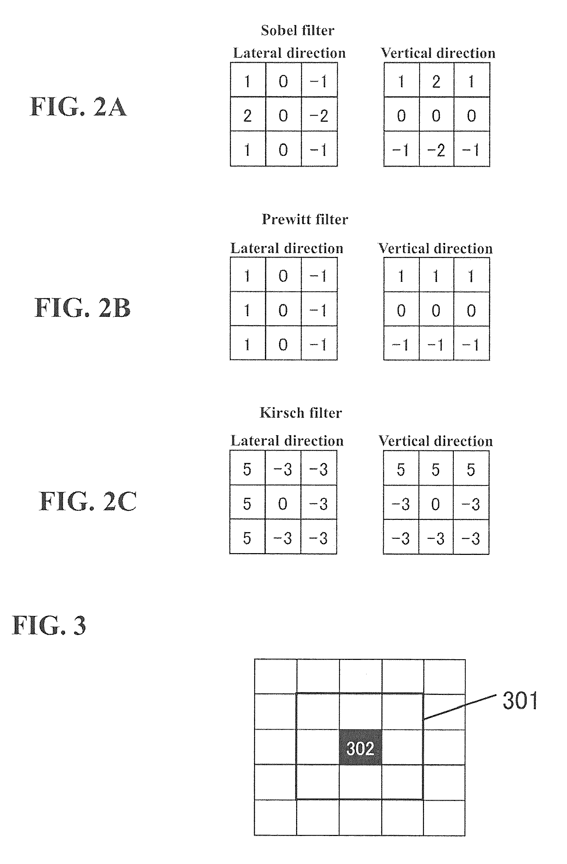

FIG. 2A shows 3×3 filter matrices, which are referred to as "Sobel filters". A "Sobel filter" is a filter for obtaining a primary spatial differential value that corresponds to a specific direction, and is widely used for detecting the contour of an object. In addition thereto, a "Prewitt filter" (FIG. 2B), a "Kirsch filter" (FIG. 2C), and the like are widely used as filters for detecting a contour.

FIGS. 2A to 2C show filters that correspond to the lateral direction (left to right), and filters that that correspond to the vertical direction (upper to lower) of the above-described types. When these filters are used to acquire a feature amount, a method in which a plurality of filters are combined in order to cover a plurality of directions is often used.

When such a 3×3 filter is convolved with respect to, for example, a region 301 of FIG. 3, a feature amount that corresponds to a pixel 302 can be acquired. Accordingly, by performing an arithmetic operation on all pixels included in an image, it is possible to acquire feature amounts of the entire image (that is, feature amounts that include information on the contour of an object).

### «Pixel Difference»

Pixel difference is a method in which a difference between brightness values of two local regions is used as a feature amount.

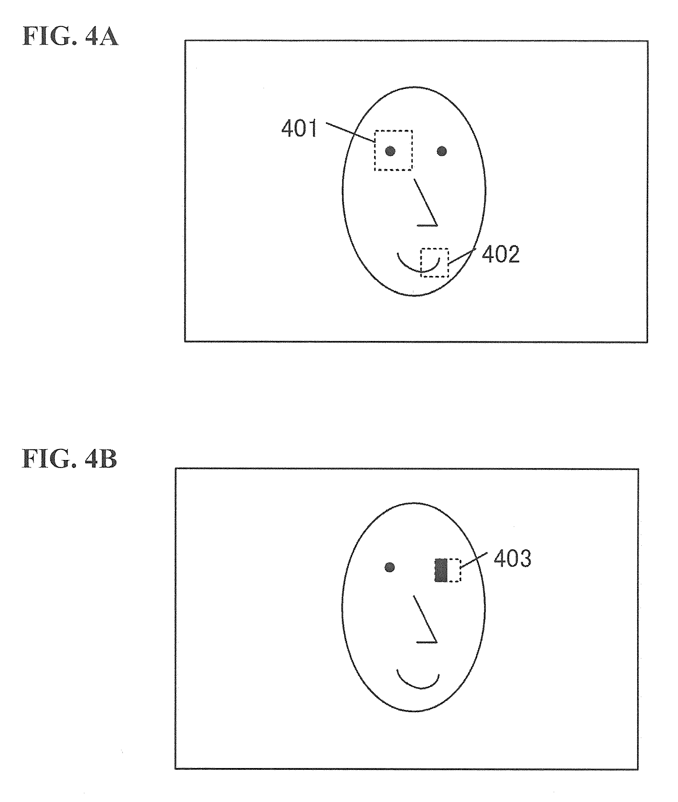

For example, brightness values of pixels respectively included in a region 401 and a region 402 shown in FIG. 4A are normalized and summed up, and a difference between the regions is obtained. In this example, assuming that the sum of brightness values of the pixels included in the region 401 is I₁ and the sum of brightness values of the pixels included in the region 402 is I₂, a feature amount that corresponds to a difference between the two regions is given as I₁ - I₂. Accordingly, it is possible to obtain pattern information representing a difference in density of the object.

A Haar-like feature amount is a feature amount that is similar to the pixel difference.

The Haar-like feature amount will be described with reference to FIG. 4B. The Haar-like feature amount refers to a feature amount that can be acquired by subtracting the sum of brightness values of pixels included in the white region of a rectangular region, serving as a target, from the sum of brightness values of pixels included in the black region. Note that the black region and the white region may be arranged in any pattern, but if the sums of brightness values of pixels included in the respective regions are to be compared, the regions need to have the same area ratio or, if the regions have different area ratios, weighting needs to be given according to the area ratios.

For example, the reference numeral 403 shows a black region that corresponds to the center of the eye, and a white region that corresponds to the periphery of the eye, the black and white regions having areas that are equal to each other. By using such a feature amount, it is possible to compare the feature amount with a pattern showing that "the region of the center of an eye is darker than the region of the periphery of the eye". By acquiring Haar-like feature amounts at a plurality of positions in an image and comparing the acquired feature amounts with a plurality of patterns, it is possible to calculate a probability of presence of an object in the image.

Note that, although an example has been described in which the sum of brightness values of pixels included in a white region is subtracted from the sum of brightness values of pixels included in a black region, it is also possible to obtain a difference in average of brightness values between the white region and the black region. In this case, the regions do not need to have the same area ratio.

Any other methods may be used as the method for calculating feature amounts that correspond to an image. For example, a feature amount that represents a difference in brightness value in a binary string, such as binary robust independent elementary features (BRIEF) or binary robust invariant scalable keypoints (BRISK), may be used.

The feature amount acquiring unit 12 according to the present embodiment acquires, using the above-described method or the like, feature amounts that correspond to pixels or local regions, and defines the set of feature amounts as feature amounts that correspond to the acquired image. The feature amount acquired by the feature amount acquiring unit 12 is a set (vector) of at least one value.

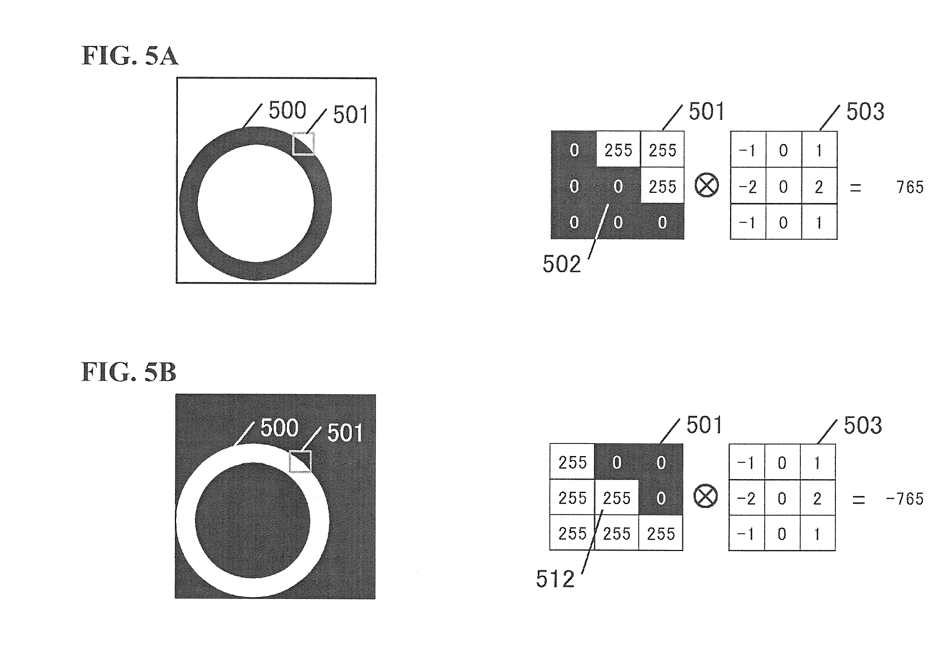

Hereinafter, the problem caused by the conventional technique will be described with reference to FIGS. 5A and 5B. FIG. 5A shows an image that includes a figure 500, and an enlarged view of a region 501 that is a part of the image and shown in 3×3 pixels. In the present example, a Sobel filter 503 in the horizontal direction is applied to a pixel 502 that is located at the center of the region 501. Consequently, the value "765" is obtained as a feature amount that corresponds to the pixel 502.

On the other hand, FIG. 5B shows an example of the case where the contrast of the image shown in FIG. 5A is inverted. When the Sobel filter is applied to such an image, the value "-765" is obtained as a feature amount. That is, although the shape of the object is the same, the feature amounts that correspond to the pixels have different values.

However, even if the contrast is inverted, this does not pose a problem in the case of different objects. However, when a target image is an image of a person, the contrast that is to be obtained is inverted in some cases depending on the state of the illumination, the skin color of the target person, or the like, and in such a case, it is impossible to correctly recognize the presence of the face.

Therefore, the image processing apparatus according to the present embodiment has a configuration in which the feature amount acquiring unit 12 acquires feature amounts that correspond to an image, and then the feature amount correction unit 13 may correct the feature amount. Specifically, if the feature amount expressed in vector includes a negative value, the negative value is updated using the absolute value of this value. That is, the negative value is corrected to the positive value.

For example, in the case of FIG. 5B, since the feature amount that corresponds to a pixel 512 has a negative value, the value is corrected to "765" using the absolute value of this value.

The image recognition unit 14 performs object recognition based on the feature amount corrected in this way. Accordingly, even when the contrast of an object is inverted, the same recognition result can be obtained with respect to the same object. Note that any method may be used as an object recognition method as long as object recognition is performed based on feature amounts. For example, object recognition may also be performed by pattern matching using a support vector machine (SVM) or the like.

Note that in the present embodiment, an example is taken in which feature amounts that correspond to pixels are acquired by filtering, and a set of feature amounts that correspond to pixels is used as feature amounts that correspond to an image, but it is also possible to correct a feature amount that is acquired by another method, such as pixel difference or Haar-like feature amount, by the same manner.

### <Process flowchart>

Hereinafter, a process flowchart for realizing the above-described functions will be described.

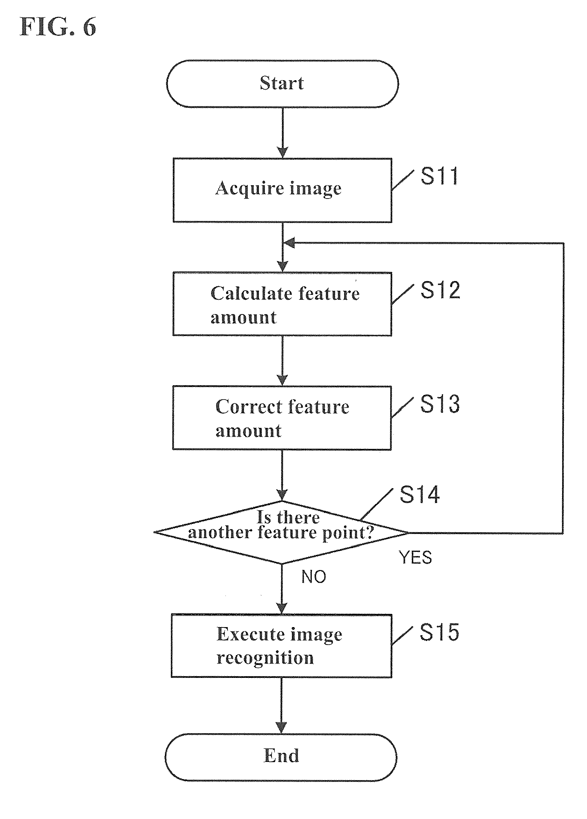

FIG. 6 is a flowchart of processing of the image processing apparatus 10 according to the present embodiment. The processing starts with a user operation (for example, an operation for reading a stored image).

First, in step S11, the image acquiring unit 11 acquires an image. In the present embodiment, an image stored in advance is acquired from a storage unit, but an image may also be acquired via a communication unit or image capturing unit.

Then, in step S12, the feature amount acquiring unit 12 extracts one feature point included in the acquired image, and acquires a feature amount that corresponds to the feature point. "Feature point" refers to a pixel that is used when the image recognition unit 14 performs image recognition. All pixels included in the image or pixels that satisfy a predetermined condition as well may serve as the feature point. Furthermore, any method may be used as a method for acquiring a feature amount.

In step S13, the feature amount correction unit 13 determines whether or not the feature amount acquired in step S12 includes a negative value, and if a negative value is included, the value is corrected to a positive value.

Then, in step S14, the feature amount acquiring unit 12 determines whether or not there is another feature point in the image, and if there is another feature point, the procedure shifts to step S12. The feature amount acquiring processing and feature amount correcting processing are performed in this way, with respect to all feature points included in the image.

If, in step S14, it is determined that there is no feature point in the image, the procedure shifts to step S15, where the image recognition unit 14 executes image recognition using the corrected feature amount.

As described above, in the image processing apparatus according to the present embodiment, when a feature amount (a feature amount that is expressed in vector) that corresponds to an image is acquired, the sign of the value serving as the feature amount is referenced, and if the value is a negative value, the value is corrected to a positive value. With this, it is possible to obtain feature amounts that are similar to each other to the extent that objects can be recognized as belonging to the same category even when the contrast of the objects is inverted, and to identify the object included in the image with accuracy.

### (Second Embodiment)

In the first embodiment, values that are obtained by performing an arithmetic operation based on brightness values of pixels are directly used as feature amounts. In contrast, a second embodiment is an embodiment in which values that are encoded based on brightness values of pixels are used as feature amount. Since an image processing apparatus according to the second embodiment has the same configuration as that of the first embodiment, detailed description thereof is omitted, and only differences will be described.

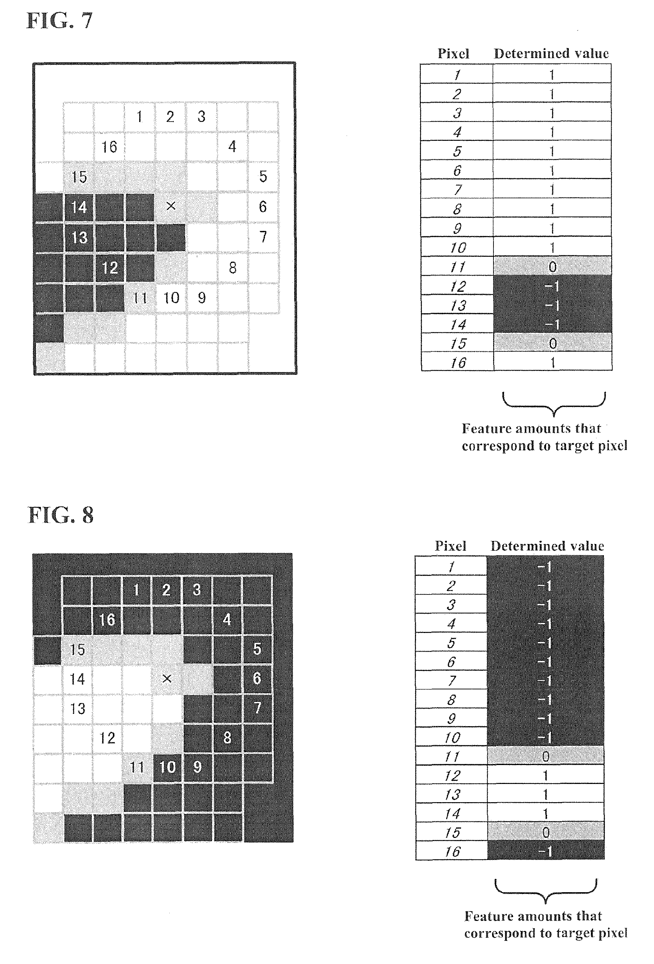

Hereinafter, a case where encoded values are used as feature amounts will be described. Here, a method for calculating feature amounts using the technique that is referred to as "FAST" is taken as an example.
"Features from accelerated segment test" (FAST) refers to a technique for detecting a corner of an object. In FAST, it is determined whether pixels on the perimeter of a circle surrounding a target pixel are brighter or darker than the target pixel, and if the same result is given a predetermined number of times or more in a row, it is determined that the target pixel is present at a corner. For example, if the pixel indicated by x in FIG. 7 is a target pixel, it is determined whether each of the pixels labeled with 1 to 16 is brighter or darker than the target pixel. Here, encoding is performed such that 1 is given to a pixel if the pixel is brighter than the target pixel, 0 is given to a pixel if the pixel has the same brightness as that of the target pixel, and -1 is given to a pixel if the pixel is darker than the target pixel. In the case of the example of FIG. 7, when the pixel that is to be compared is in white, it is determined to be "bright", when the pixel that is to be compared is in gray, it is determined to be "equivalent", and, when the pixel that is to be compared is in black, it is determined to be "dark".

The 16-dimensional feature amounts thus acquired serve as feature amounts representing whether or not the target pixel is present at a corner. For example, if the same value is given n times or more in a row (for example, 8 time or more), it is possible to determine that the target pixel is at a corner.

According to the second embodiment, in step S12 of FIG. 6, the above-described 16-dimensional feature amounts are calculated as feature amounts that correspond to feature points.

In the example of FIG. 7 as well, the same problem as that described in the first embodiment occurs. That is, when the contrast of an object is inverted, the relationship of the contrast with respect to a target pixel is also inverted, and different feature amounts are acquired. Specifically, as shown in FIG. 8, the feature amounts have the opposite signs.

Accordingly, in the second embodiment, the three encoded results, namely, "dark", "equivalent", and "bright", that are obtained by comparison in contrast with respect to a target pixel are corrected to two results, namely, "equivalent" and "non-equivalent". "Equivalent" may be the case where the difference is 0, or the case where the difference is a threshold or less. The conditions of the respective cases can be defined as below (I₁ and I₂ are brightness values of pixels that are to be compared with each other, and t is a threshold)
(1) If I₁ - I₂ = 0, the result is regarded as equivalent, and otherwise as non-equivalent.
(2) If -t < I₁ - I₂ < t, the result is regarded as equivalent, and otherwise as non-equivalent.
Note that I₁ and I₂ may also be the sums of brightness values of pixels included in respective local regions.

Specifically, if the value encoded in step S12 is "dark (-1)", correction in which the value is overwritten to "non-equivalent (1)" is performed in step S13. Note that "bright (1)" has the same value as that of "non-equivalent (1)", and thus is not overwritten.

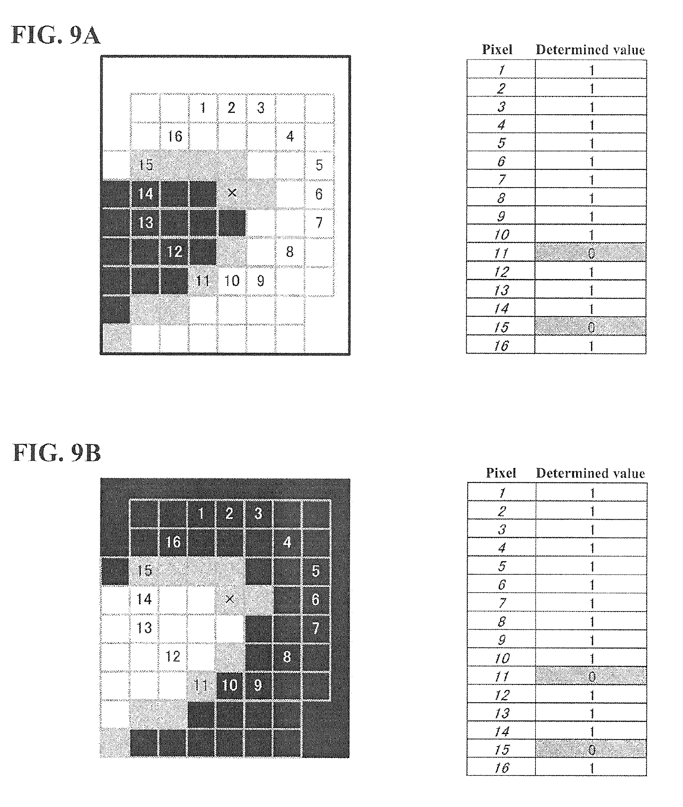

As a result, the corrected feature amounts are as shown in FIGS. 9A and 9B. In other words, even when the contrast of an object is inverted, it is possible to acquire the same feature amounts, as with the first embodiment. Furthermore, as a result, it is possible to identify an object included in the image with accuracy.

Note that in the second embodiment, FAST is taken as an example of a feature amount calculation method, but another method is also applicable as long as it is a method in which the magnitude of values is encoded. For example, a method may also be applicable in which it is determined whether a value obtained by pixel difference is a positive value or negative value, and the value is encoded.

### (Modification)

The above-described embodiments are merely examples, and the present invention can suitably be modified and implemented without departing from the spirit of the invention.

For example, in the description of the first embodiment, the feature amount correction unit 13 detects and corrects a negative feature amount, but it is also possible to use two feature amounts, namely, a feature amount before correction and a corrected feature amount. For example, in the case of FIG. 5B, both values of "-765" and "765" may be used as feature amounts that correspond to the pixel 512.

Furthermore, in the description of the embodiments, a single method is used to acquire feature amounts, but it is also possible that a plurality of methods are used to acquire a plurality of sets of feature amounts, and the plurality of sets of feature amounts are combined with each other and used as a total feature amount. Moreover, in the processing of FIG. 6, the feature amount calculation is performed while extracting pixels serving as feature points one by one, but the feature amount calculation may also be performed while extracting a plurality of local regions one by one. Moreover, when a plurality of methods are used to acquire feature amounts, the procedure from steps S12 to S13 may also be executed a plurality of times for each method.

### LIST OF REFERENCE NUMERALS

- 10: Image processing apparatus
- 11: Image acquiring unit
- 12: Feature amount acquiring unit
- 13: Feature amount correction unit
- 14: Image recognition unit
- 15: Input/output unit

## Claims

1. An image processing apparatus comprising:
an image acquiring unit (11) configured to acquire an image; and
a feature amount acquiring unit (12, 13) configured to acquire feature amounts that correspond to the acquired image by performing a predetermined arithmetic operation on the image, and to output the acquired feature amounts,
wherein when the acquired feature amounts include a negative value, the feature amount acquiring unit replaces the negative value with the absolute value of the negative value.

2. The image processing apparatus according to claim 1,
wherein the feature amount acquiring unit acquires feature amounts that respectively correspond to a plurality of target pixels included in the acquired image, and outputs the acquired feature amounts as feature amounts that correspond to the image.

3. The image processing apparatus according to claim 2,
wherein each of the feature amounts that correspond to target pixels is a value obtained by executing a predetermined arithmetic operation on a brightness value of the corresponding target pixel and a brightness value of a pixel that is located in the vicinity of that target pixel.

4. The image processing apparatus according to claim 2,
wherein each of the feature amounts that correspond to target pixels is a value representing a difference between brightness values of the corresponding target pixel and a pixel that is located in the vicinity of that target pixel.

5. The image processing apparatus according to claim 1,
wherein the feature amount acquiring unit acquires feature amounts that respectively correspond to a plurality of local regions included in the acquired image, and outputs the acquired feature amounts as feature amounts that correspond to the image.

6. The image processing apparatus according to claim 5,
wherein each of the feature amounts that correspond to local regions is a value representing a difference between brightness values of the corresponding local region and a region that is located in the vicinity of that local region.

7. An identification apparatus comprising:
the image processing apparatus according to any one of claims 1 to 6; and
an identifying unit (14) configured to identify any one of a face, a human body, a character, an animal, a vehicle, and a predetermined object that are included in an image, based on feature amounts that were output by the image processing apparatus.

8. An image processing apparatus comprising:
an image acquiring unit (11) configured to acquire an image; and
a feature amount acquiring unit (12, 13) configured to acquire feature amounts that correspond to the acquired image by encoding a result obtained by comparing brightness values of a plurality of pixels included in the image,
wherein when comparing the brightness values, the feature amount acquiring unit determines values that indicate whether or not the compared brightness values are different from each other, and generates feature amounts that correspond to the image using the values.

9. An image processing method of an image processing apparatus that outputs feature amounts corresponding to an acquired image, the method comprising:
an image acquiring step of acquiring an image; and
a feature amount acquiring step of acquiring feature amounts that correspond to the acquired image by performing a predetermined arithmetic operation on the image, and outputting the acquired feature amounts,
wherein in the feature amount acquiring step, when the acquired feature amounts include a negative value, the negative value is replaced with the absolute value of the negative value.

10. A non-transitory computer-readable storage medium having recorded thereon the image processing program for causing a computer to output feature amounts that correspond to an acquired image to execute:
an image acquiring step of acquiring an image; and
a feature amount acquiring step of acquiring feature amounts that correspond to the acquired image by performing a predetermined arithmetic operation on the image, and outputting the acquired feature amounts,
wherein in the feature amount acquiring step, when the acquired feature amounts include a negative value, the negative value is replaced with the absolute value of the negative value.
